# EUROPEAN PATENT SPECIFICATION

(11) **EP 4 123 340 B1**
(45) Date of publication and mention of the grant of the patent: **01.10.2025**
(21) Application number: 21772115.8
(22) Date of filing: 03.02.2021
(51) Int. Cl.: G01S 19/25

(54) **INFORMATION PROCESSING DEVICE, ACTION ANALYSIS SYSTEM, ACTION ANALYSIS METHOD, AND PROGRAM**
INFORMATIONSVERARBEITUNGSVORRICHTUNG, AKTIONSANALYSESYSTEM, AKTIONSANALYSEVERFAHREN UND PROGRAMM
DISPOSITIF DE TRAITEMENT D'INFORMATIONS, SYSTÈME D'ANALYSE D'ACTION, PROCÉDÉ D'ANALYSE D'ACTION, ET PROGRAMME

(30) Priority: 19.03.2020 JP 2020048690
(43) Date of publication of application: 25.01.2023
(73) Proprietor: Casio Computer Co., Ltd., Tokyo 151-8543 (JP)
(72) Inventor: TODA, Naoto, Hamura-shi, Tokyo 205-8555 (JP); SHINGYOJI, Ryuji, Hamura-shi, Tokyo 205-8555 (JP); NISHIZAKA, Nobuyoshi, Hamura-shi, Tokyo 205-8555 (JP)
(74) Representative: Grünecker Patent- und Rechtsanwälte PartG mbB
(86) International application number: PCT/JP2021/003837
(87) International publication number: WO 2021/186929

(56) References cited:
- JP-A- 2015 190 851
- JP-A- 2019 060 624
- JP-A- 2019 168 372
- US-A1- 2015 382 304
- US-A1- 2018 128 896
- US-A1- 2018 224 559

## Description

### TECHNICAL FIELD

The present invention relates to an information processing device, a behavior analysis system, a behavior analysis method, and a program that use positioning satellite information necessary for satellite positioning.

### BACKGROUND ART

Conventionally, there is known a technique of performing positioning using positioning satellite information such as an actual ephemeris or a prediction ephemeris acquired from a management server rather than a positioning satellite. Patent Document 1 discloses such a type of technique. Patent Document 1 discloses a network-assisted GPS positioning system in which a large number of GPS positioning terminals are connected to a positioning server via a mobile communication network such as a mobile phone network, and the positioning server sends an actual ephemeris to the GPS positioning terminals in response to an actual ephemeris acquisition request from the GPS positioning terminals, thereby enabling GPS positioning even when a GPS reception environment is poor.

Patent Document 2 describes a portable biometric monitoring device having location sensors using assisted GPS. The portable biometric monitoring device is arranged to obtain updated ephemeris data from an associated secondary device by a short range, low power communication protocol. The secondary device is capable of obtaining the ephemeris data from an assisted GPS server. Rules are provided to define a timing when the train ephemeris data is updated.

Patent Document 3 describes a method and system for Bluetooth device synchronization using the Bluetooth Low-Energy (BLE) protocol.

Patent Document 4 describes an electronic device capable of updating additional data corresponding to detecting a present location, upon a request.

Patent Document 1: Japanese Unexamined Patent Application, Publication No.2006-162265
Patent Document 2: US Patent Application Publication US 2018/0224559 A1
Patent Document 3: US Patent Application Publication US 2015/0382304 A1
Patent Document 4: US Patent Application Publication US 2018/0128896 A1

### DISCLOSURE OF THE INVENTION

### Problems to be Solved by the Invention

Meanwhile, there is an information processing device that does not acquire positioning satellite information directly from a management server, but acquires positioning satellite information via a communication device that communicates with the management server, and performs positioning processing using the acquired positioning satellite information. However, according to such a method, at timing when the information processing device updates the positioning satellite information, communication should be established between the communication device that retains the positioning satellite information of the management server and the information processing device that performs the positioning processing. For example, there are a case where the communication device retaining the positioning satellite information and the information processing device are in a positional relation that prevents the communication therebetween from being constantly established and a case where power of the communication device is turned off. In these cases, even at timing when the positioning satellite information is acquired, the communication between the communication device and the information processing device may not be established and the positioning satellite information may not be updated to the latest state.

The present invention has been made in view of the above circumstances, and an object thereof is to provide an information processing device, a behavior analysis system, a behavior analysis method, and a program that can reliably update positioning satellite information acquired via a communication device.

### Means for Solving the Problems

This is achieved by the features of the independent claims.

### Effects of the Invention

According to the present invention, it is possible to provide an information processing device, a behavior analysis system, a behavior analysis method, and a program that can reliably update positioning satellite information acquired via a communication device.

### BRIEF DESCRIPTION OF THE DRAWINGS

FIG. 1 is a system configuration diagram showing a configuration of a behavior analysis system according to an embodiment of the present invention;
FIG. 2 is a schematic diagram showing a usage example of a sensor device according to the embodiment of the present invention;
FIG. 3 is a block diagram showing a hardware configuration of the sensor device according to the embodiment of the present invention;
FIG. 4 is a block diagram showing a hardware configuration of a user terminal according to the embodiment of the present invention;
FIG. 5 is a sequence diagram illustrating data acquisition processing when the sensor device according to the embodiment of the present invention can acquire a prediction ephemeris from the user terminal within a predetermined period;
FIG. 6 is a sequence diagram illustrating the data acquisition processing in the case where the sensor device according to the embodiment of the present invention cannot acquire the prediction ephemeris from the user terminal within the predetermined period;
FIG. 7 is a functional block diagram showing a functional configuration for executing processing related to a prediction ephemeris in the functional configuration of the sensor device according to the embodiment of the present invention;
FIG. 8 is a functional block diagram showing a functional configuration for executing processing related to a prediction ephemeris in the functional configuration of the user terminal according to the embodiment of the present invention; and
FIG. 9 is a flowchart showing a flow of processing in which the sensor device according to the embodiment of the present invention acquires the prediction ephemeris.

### PREFERRED MODE FOR CARRYING OUT THE INVENTION

Hereinafter, an embodiment of the present invention will be described with reference to the drawings.

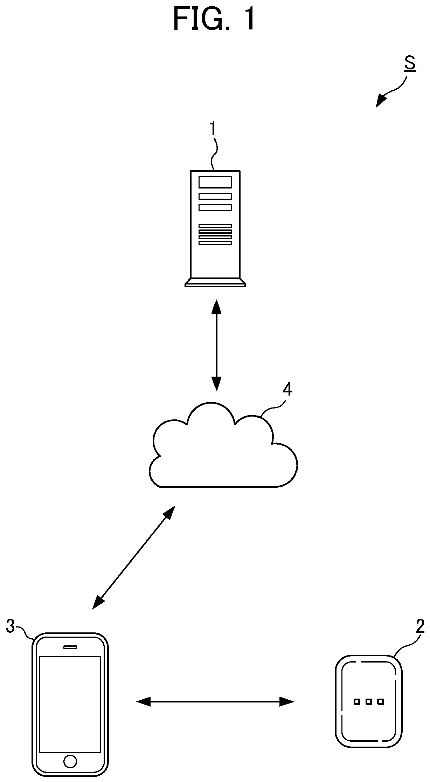

FIG. 1 is a system configuration diagram showing a configuration of a behavior analysis system S according to an embodiment of the present invention. As shown in FIG. 1, the behavior analysis system S includes a management server 1, a sensor device 2, and a user terminal 3.

The management server 1 and the user terminal 3 can communicate with each other. The communication between the management server 1 and the user terminal 3 is realized by, for example, any one of the Internet, a LAN (Local Area Network), and a mobile phone network, or a network 4 that is formed by a combination thereof. Further, the user terminal 3 and the sensor device 2 can also communicate with each other. The communication between the user terminal 3 and the sensor device 2 is performed by, for example, BLE (Bluetooth (registered trademark) Low Energy). A communication method is an example, and the communication between the management server 1 and the user terminal 3 and the communication between the user terminal 3 and the sensor device 2 may use other communication methods.

The management server 1 is a management device having an arithmetic processing function and a communication function. The management server 1 is realized by, for example, a server device or an electronic device such as a personal computer. The management server 1 of the present embodiment executes processing for transmitting positioning satellite information used in GNSS (GLOBAL Navigation Satellite System) to the user terminal 3. As the GNSS, for example, GPS, GLONASS, Galileo, quasi-zenith satellites, or the like are used.

The positioning satellite information includes, for example, an actual ephemeris indicating information on a satellite orbit and a prediction ephemeris. In the following embodiment, a case will be described in which a prediction ephemeris is used as the positioning satellite information. In the management server 1, the prediction ephemeris is updated in a predetermined time zone of a coordinated universal time (UTC). For example, the prediction ephemeris retained by the management server 1 is updated during an update time zone from 0:00 to 1:00. The prediction ephemeris is converted into text data, for example, and transmitted from the management server 1 to the user terminal 3. A prediction ephemeris for a predetermined number of days (for example, three days) is generated in the user terminal 3 by the data transmitted from the management server 1. When a download request of the prediction ephemeris generated in the user terminal 3 is performed during a predetermined update time zone, the management server 1 transmits to the user terminal 3 an error indicating that the prediction ephemeris cannot be properly acquired.

The sensor device 2 is an information processing device that acquires physical information or the like of a user when the user is exercising. The sensor device 2 of the present embodiment has, for example, a sensing function of sensing, as physical information of the user, a walking/running pitch, a stride, a posture, and a waist inclination or the like of the user when the user is walking or running, a positioning function of positioning a position of the sensor device 2, and a communication function of transmitting the sensing result to the user terminal 3. The physical information acquired by the sensor device 2 is transmitted to the user terminal 3.

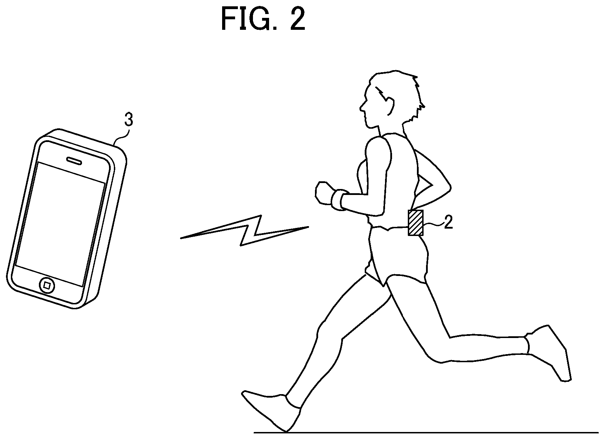

An example of user information will be described which is acquired by the sensor device 2. FIG. 2 is a schematic diagram showing a usage example of the sensor device 2 according to the embodiment of the present invention. As shown in FIG. 2, the sensor device 2 of the present embodiment is attached near a waist along a trunk of the user who performs a predetermined exercise (the case of walking or running is described in the present embodiment, but the exercise is not limited thereto).

The sensor device 2 acquires a walking/running locus and a walking/running distance by the positioning function when an activity such as walking or running is performed. Further, in addition to the walking/running distance, a posture or the like during walking/running may be calibrated using an angle formed by an acceleration of gravity and an axis of the sensor device 2 in a longitudinal direction (a predetermine direction). In the following description, behavior information indicating the result of the activity acquired by the sensor device 2 is referred to as a log file.

The user terminal 3 is a communication device having an arithmetic processing function and a communication function. The user terminal 3 is implemented by, for example, a wearable device such as a smart phone, a tablet, or a smart watch that can be carried by the user.

The user terminal 3 of the present embodiment may function as a behavior analysis device having a communication function of receiving sensor information from the sensor device 2, an analysis function of analyzing the sensor information, a positioning function of positioning a position of the user terminal 3, and an output function of displaying and outputting the analysis result. By the output function of the user terminal 3, the user can grasp the analysis result of the sensor information received from the sensor device 2 in a form that is easily and intuitively recognizable.

In response to an instruction from the sensor device 2, the user terminal 3 requests a connection to the management server 1, downloads a prediction ephemeris, and transmits the downloaded prediction ephemeris to the sensor device 2. For example, after acquiring the prediction ephemeris in a text data format from the management server 1, the user terminal 3 bundles data for a predetermined number of days (for example, three days) as one file in a binary format, and transmits the file to the sensor device 2.

In addition, the user terminal 3 transmits a current location and a current time retained by the user terminal 3 to the sensor device 2 in response to the connection request from the sensor device 2. The sensor device 2 uses the information acquired from the user terminal 3 to accurately acquire the position of the sensor device 2 with the positioning function described above.

### [Hardware Configuration]

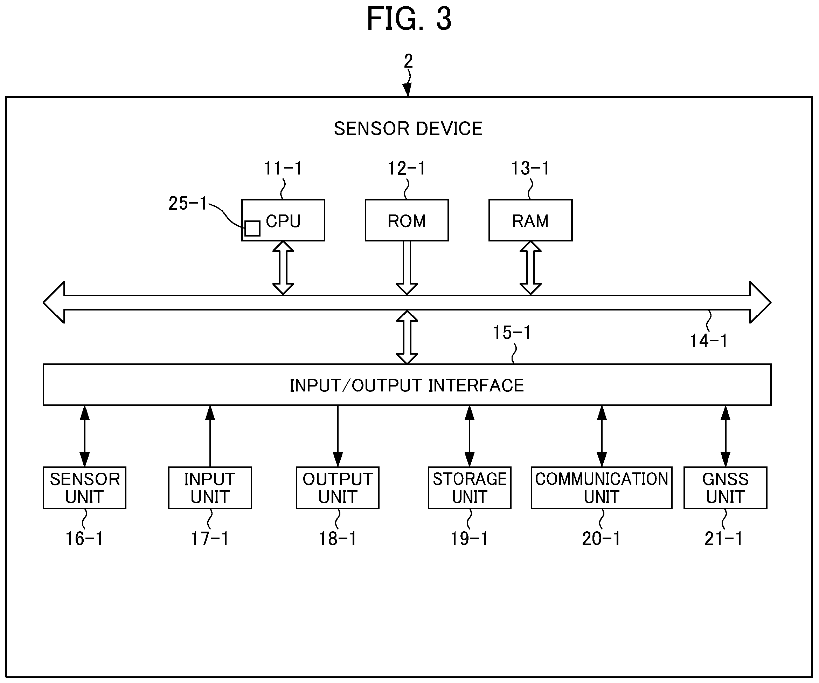

Next, an example of a hardware configuration of the sensor device 2 will be described. FIG. 3 is a block diagram showing a hardware configuration of the sensor device 2 according to the embodiment of the present invention. As shown in FIG. 3, the sensor device 2 includes a CPU (Central Processing Unit) 11-1, a ROM (Read Only Memory) 12-1, a RAM (Random Access Memory) 13-1, a bus 14-1, an input/output interface 15-1, a sensor unit 16-1, an input unit 17-1, an output unit 18-1, a storage unit 19-1, a communication unit 20-1, and a GNSS unit 21-1.

The CPU 11-1 executes various processing according to programs recorded in the ROM 12-1 or programs loaded from the storage unit 19-1 to the RAM 13-1. Further, the CPU 11-1 is configured to be capable of reading current time information from a clocking function brought about by an RTC (Real Time Clock) 25-1 as a time generator provided inside.

The RAM 13-1 also appropriately stores data necessary for the CPU 11-1 to execute various processing.

The CPU 11-1, the ROM 12-1, and the RAM 13-1 are connected to each other via the bus 14-1. The input/output interface 15-1 is also connected to the bus 14-1. The input/output interface 15-1 is connected with the sensor unit 16-1, the input unit 17-1, the output unit 18-1, the storage unit 19-1, the communication unit 20-1, and the GNSS unit 21-1.

The sensor unit 16-1 is configured by various sensors (for example, an acceleration sensor and an angular velocity sensor) for measuring a three-dimensional movement of the sensor device 2 itself to detect at least acceleration and angular velocity given to the sensor device 2 according to a motion of a subject attached with it, and outputs the acceleration and angular velocity as sensor information. The output sensor information is stored in the storage unit 19-1 and transferred to the user terminal 3 later via the communication unit 20-1. In the present embodiment, start and end of the sensing are performed in response to an operation of the user to the input unit 17-1.

The input unit 17-1 is configured by various buttons, and inputs various information according to the instruction operation of the user.

The output unit 18-1 is configured by an LED (Light Emitting Diode) lamp, a display, and a speaker, and outputs light, images, and sounds.

The storage unit 19-1 is configured by a hard disk or a flash memory, and stores various data.

The communication unit 20-1 controls wireless or wired communication with another device using BLE (Bluetooth (registered trademark) Low Energy) or USB, for example.

The GNSS unit 21-1 performs positioning based on positioning satellite signals transmitted from positioning satellites. The GNSS unit 21-1 of the present embodiment includes an antenna, receives positioning satellite signals from a plurality of positioning satellites, and acquires position information of the sensor device 2.

The sensor device 2 may include a drive in which a removable medium such as a magnetic disk, an optical disk, a magneto-optical disk, or a semiconductor memory is appropriately mounted in addition to the configuration illustrated above. Programs and data read from the removable medium by the drive are installed in the storage unit 19 as necessary.

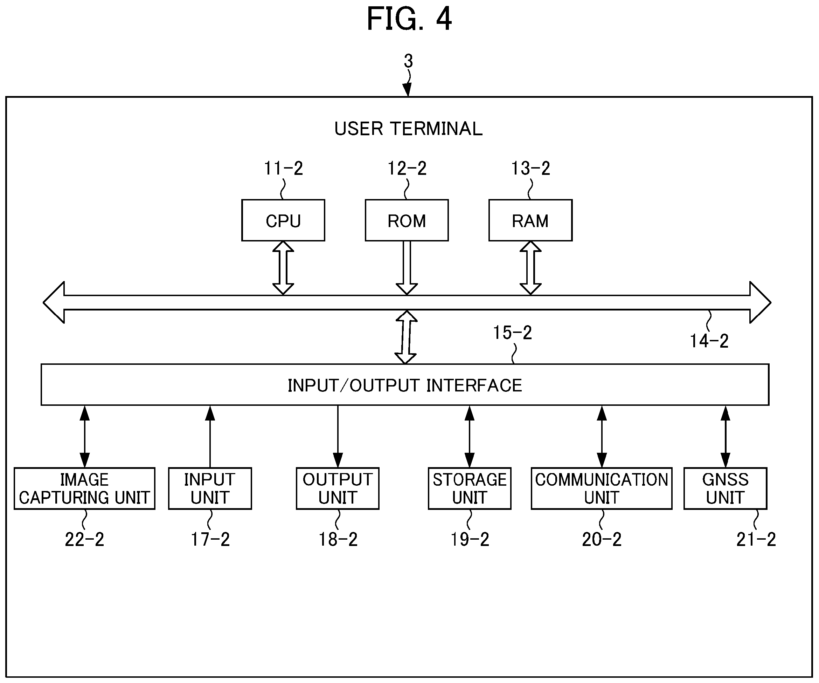

Next, a hardware configuration of the user terminal 3 will be described. FIG. 4 is a block diagram showing a hardware configuration of the user terminal 3 according to the embodiment of the present invention. As shown in FIG. 4, the user terminal 3 includes a CPU 11-2, a ROM 12-2, a RAM 13-2, a bus 14-2, an input/output interface 15-2, an input unit 17-2, an output unit 18-2, a storage unit 19-2, a communication unit 20-2, a GNSS unit 21-2, and an image capturing unit 22-2.

The configuration from the CPU 11-2 to the input/output interface 15-2, the configuration from the input unit 17-2 to the GNSS unit 21-2, and a drive (not shown) are substantially the same as those of configuration of the sensor device 2. In the user terminal 3, the configuration similar to that of the sensor device 2 will not be described. The user terminal 3 further includes an image capturing unit 22-2. The image capturing unit 22-2 includes an optical lens and an image sensor which are not shown. Data of an image captured by the image capturing unit 22-2 is appropriately supplied to the CPU 11-2 and an image processing unit (not shown).

The sensor device 2 acquires a prediction ephemeris via the user terminal 3, and acquires a position of the sensor device 2 itself using the prediction ephemeris. The prediction ephemeris is preferably an updated prediction ephemeris. Further, in order for the acquired prediction ephemeris to function efficiently, the position information of the sensor device 2 is necessary to be within a predetermined distance (for example, several tens of kilometers) from an actual position, or time information of the sensor device 2 indicating the time is necessary to be within a predetermined time (for example, ± several tens of seconds) for an actual time.

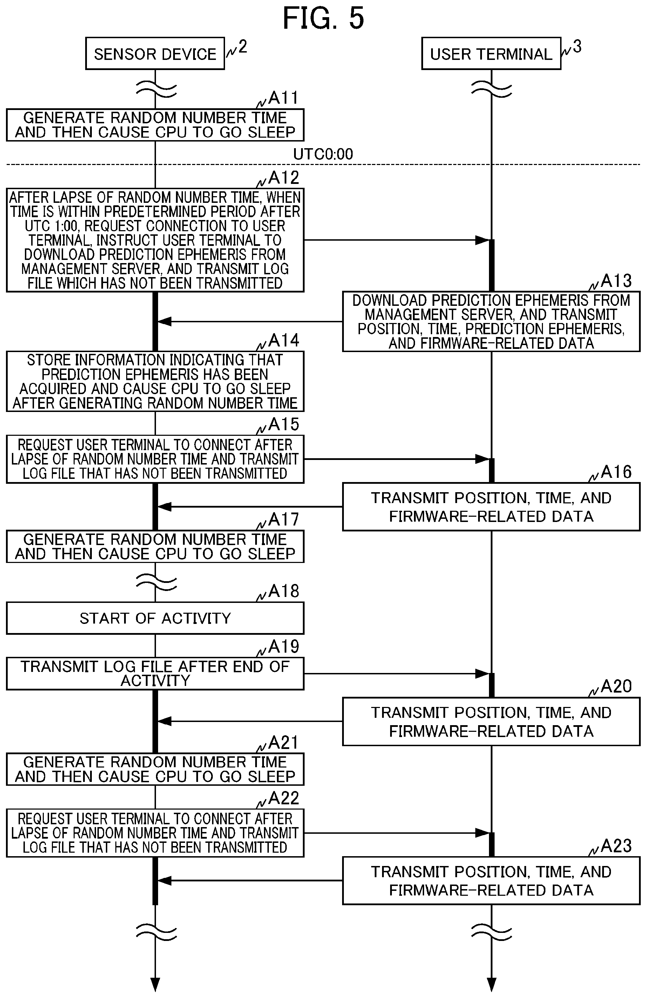

Next, an overall flow of communication processing between the sensor device 2 and the user terminal 3 will be described. FIG. 5 is a sequence diagram illustrating data acquisition processing when the sensor device 2 according to the embodiment of the present invention can acquire a prediction ephemeris from the user terminal 3 within a predetermined period.

In the sequence, it is assumed that the sensor device 2 and the user terminal 3 are subjected to pairing in a predetermined pairing mode. The pairing is a process of executing connection setting between the sensor device 2 and the user terminal 3. In the pairing process, counterpart pairing information required for connection is stored in each of the sensor device 2 and the user terminal 3. Through the pairing process, the sensor device 2 and the user terminal 3 become communicable. The pairing includes an instruction to cause the user terminal 3 to acquire the prediction ephemeris from the management server 1.

Further, the sequence will be described as starting from a time before UTC0:00 when the management server 1 starts updating the prediction ephemeris.

The sensor device 2 generates a random number time (for example, a random time between 1 and 3 hours) that determines a time from a sleep state to automatic operation start-up, sets an operation starting time to RTC 25-1 based on the generated random number time, and then causes the CPU 11-1 to go sleep (step A11). Thus, the communication between the sensor device 2 and the user terminal 3 is temporarily terminated. The random number time is a non-constant, irregular time calculated by predetermined processing. The random number time is set to different times whenever being calculated. Further, the operation starting time set based on the random number time is set to a time excluding UTC0:00 to 1:00, which is an update time zone in which the management server 1 updates the prediction ephemeris. The user terminal 3 preferably has a display function of being capable of grasping a sleep state of the sensor device 2.

The sensor device 2 starts operating the CPU 11-1 after the random number time has elapsed from the sleep state, and requests the paired user terminal 3 to connect. At this time, when the operation starting time is within a predetermined time (within a predetermined period) after UTC1:00, for example, within 1 to 3 hours, the sensor device 2 instructs the user terminal 3 to download the prediction ephemeris from the management server 1. Further, when the sensor device 2 retains a log file that has not yet been transmitted to the user terminal 3, the sensor device 2 transmits the log file to the user terminal 3, as a log file that has not been transmitted to the user terminal 3 (step A12). By a timer function of the RTC 25-1 in which an operation starting time is set, the CPU 11-1 starts to operate due to an interruption signal, which is output by RTC 25-1 at the operation starting time.

The user terminal 3, which has received the connection request from the sensor device 2, downloads the prediction ephemeris from the management server 1. Then, the user terminal 3 transmits position and time data, the downloaded prediction ephemeris, and firmware-related data to the sensor device 2 (step A13). The position and time data transmitted in the process of step A13 are accurate data based on information acquired by the user terminal 3 through communication with a base station, and the prediction ephemeris is downloaded from the management server 1 after the update processing as described above, whereby the prediction ephemeris of the sensor device 2 is appropriately updated to the latest prediction ephemeris. In addition, the firmware-related data is data regarding whether firmware of the sensor device 2 is updated, or update data for updating the firmware. Although this applies to the following firmware-related data transmission, when there is no data related to the update of the firmware, the process of transmitting the firmware-related data to the sensor device 2 may be omitted.

After receiving the position and time data, the prediction ephemeris, and the firmware-related data from the user terminal 3, the sensor device 2 generates a random number time that determines the time until starting to automatically operate from the sleep state, and then causes the CPU 11-1 to go to sleep. Further, before going to sleep, information indicating that the prediction ephemeris can be acquired within the predetermined period is stored in one region (a communication information storage unit 192 which will be described below) of the storage unit 19-1 (step A14). Thus, the communication between the sensor device 2 and the user terminal 3 is temporarily terminated.

The sensor device 2 starts operating the CPU 11-1 after the random number time has elapsed from the sleep state, and requests the paired user terminal 3 to connect. Further, when the sensor device 2 retains a log file that has not yet been transmitted to the user terminal 3, the sensor device 2 transmits the log file to the user terminal 3, as a log file that has not been transmitted to the user terminal 3.

### (step A15).

The user terminal 3, which has received the connection request from the sensor device 2, transmits the position and time data and the firmware-related data to the sensor device 2 (step A16).

After receiving the position and time data and the firmware-related data from the user terminal 3, the sensor device 2 generates a random number time that determines the time until starting to automatically operate from the sleep state, and causes the CPU 11-1 to go to sleep (step A17).

When it is detected by a user's operation that the sleep is canceled and an activity starts, the sensor device 2 starts acquiring data indicating the result of the user's activity (step A18). The data acquired by the sensor device 2 becomes a log file. For example, when the user performs running as an activity, running-related data, for example, a running locus, a running distance, a speed, a running pitch, a stride, and a posture are stored as a log file.

It is detected by a user's operation that the activity is ended, the sensor device 2 transmits the acquired log file to the user terminal 3 (step A19). The start and end of the activity can be detected by the user's direct operation on the sensor device 2, but the start of the activity may be automatically detected by the sensor device 2 based on the information of the sensor unit 16-1 or may be automatically detected by the sensor device 2 based on the instruction received from the user terminal 3.

When receiving the log file from the sensor device 2, the user terminal 3 transmit the firmware-related data to the sensor device 2 together with the position and time data (step A20).

After receiving the position and time data and the firmware-related data from the user terminal 3, the sensor device 2 generates the random number time that determines the time until starting to automatically operate from the sleep state, and then causes the CPU 11-1 to go sleep (step A21). Even when the user turns off power of the sensor device 2 after the process of step A19, the sensor device 2 maintains the connection state with the user terminal 3 and continues data communication when the communication is established.

The sensor device 2 starts operating the CPU 11-1 after the random number time has elapsed from the sleep state, and requests the paired user terminal 3 to connect. Further, when the sensor device 2 retains a log file that has not yet been transmitted to the user terminal 3, the sensor device 2 transmits the log file to the user terminal 3, as a log file that has not been transmitted to the user terminal 3.

### (step A22)

The user terminal 3, which has received the connection request from the sensor device 2, transmits the position and time data and the firmware-related data to the sensor device 2 (step A23). Thereafter, similar sequence is performed between the sensor device 2 and the user terminal 3.

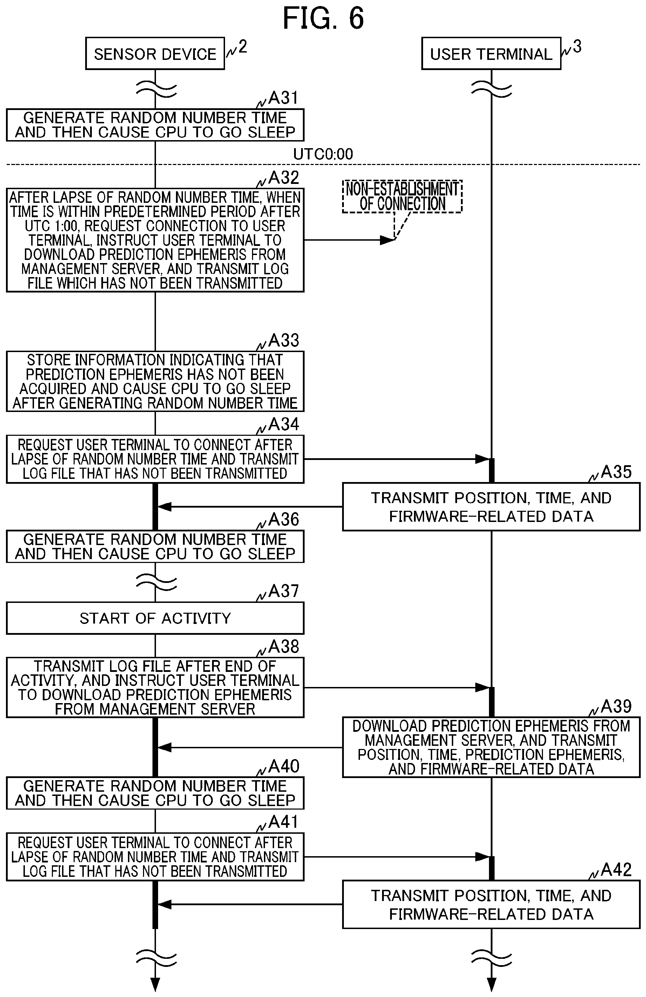

Next, data acquisition processing will be described will be described with reference to FIG. 6 in a case where the sensor device 2 according to the embodiment of the present invention cannot acquire the prediction ephemeris from the user terminal 3 within the predetermined period. FIG. 6 is a sequence diagram illustrating the data acquisition processing in the case where the sensor device 2 according to the embodiment of the present invention cannot acquire the prediction ephemeris from the user terminal 3 within the predetermined period. As in FIG. 5, it is assumed that the sensor device 2 and the user terminal 3 are subjected to pairing in a predetermined pairing mode, and the sequence will be described as starting from the time before UTC0:00 when the management server 1 starts updating the prediction ephemeris.

The sensor device 2 generates a random number time (for example, a random time between 1 and 3 hours) that determines a time from a sleep state to an automatic operation start-up, sets an operation starting time to the RTC 25-1 based on the generated random number time, and then causes the CPU 11-1 to go sleep (step A31). Thus, the communication between the sensor device 2 and the user terminal 3 is temporarily terminated. The random number time is a non-constant, irregular time calculated by predetermined processing. The random number time is set to different times whenever being calculated. Further, the operation starting time set based on the random number time is set to a time excluding UTC0:00 to 1:00, which is an update time zone in which the management server 1 updates the prediction ephemeris.

The sensor device 2 starts operating the CPU 11-1 after the random number time has elapsed from the sleep state, and requests the paired user terminal 3 to connect. At this time, when the operation starting time is within a predetermined time (within a predetermined period) after UTC1:00, for example, within 1 to 3 hours, the sensor device 2 instructs the user terminal 3 to download the prediction ephemeris from the management server 1. Further, when the sensor device 2 retains a log file that has not yet been transmitted to the user terminal 3, the sensor device 2 transmits the log file to the user terminal 3, as a log file that has not been transmitted to the user terminal 3.

### (step A32).

At this time, for example, the power of the user terminal 3 is turned off, or when the user terminal 3 is separated from the sensor device 2 to a position where communication cannot be performed, the communication is not established. When the connection is not established and no response to the connection request is returned from the user terminal 3, the sensor device 2 generates a random number time that determines the time until starting to automatically operate from the sleep state, and then causes the CPU 11-1 to go to sleep. Further, before going to sleep, information indicating that the prediction ephemeris can be acquired within the predetermined period is stored in one region (the communication information storage unit 192 which will be described below) of the storage unit 19-1 (step A33). Thus, the communication between the sensor device 2 and the user terminal 3 is temporarily terminated.

The sensor device 2 starts operating the CPU 11-1 after the random number time has elapsed from the sleep state, and requests the paired user terminal 3 to connect. Further, when the sensor device 2 retains a log file that has not yet been transmitted to the user terminal 3, the sensor device 2 transmits the log file to the user terminal 3, as a log file that has not been transmitted to the user terminal 3.

### (step A34).

The user terminal 3, which has received the connection request from the sensor device 2, transmits the position and time data and the firmware-related data to the sensor device 2 (step A35).

After receiving the position and time data and the firmware-related data from the user terminal 3, the sensor device 2 generates a random number time that determines the time until starting to automatically operate from the sleep state, and causes the CPU 11-1 to go to sleep (step A36).

When it is detected by a user's operation that the sleep is canceled and an activity starts, the sensor device 2 starts acquiring data indicating the result of the user's activity (step A37). The data acquired by the sensor device 2 becomes a log file. For example, when the user performs running as an activity, running-related data, for example, a running locus, a running distance, a speed, a running pitch, a stride, and a posture are stored as a log file.

It is detected by a user's operation that the activity is ended, the sensor device 2 transmits the acquired log file to the user terminal 3. At this time, when the storage unit 19-1 stores the information indicating that the prediction ephemeris cannot be acquired, the sensor device 2 instructs the user terminal 3 to download the prediction ephemeris from the management server 1 (step A38).

When receiving the instruction to download the log file from the sensor device 2 and the prediction ephemeris from the management server 1, the user terminal 3 downloads the prediction ephemeris from the management server 1 and transmits the firmware-related data to the sensor device 2(step A39). Since the prediction ephemeris of the user terminal 3 transmitted in the process of step A39 is downloaded from the management server 1 after the update processing as described above, the prediction ephemeris of the sensor device 2 is appropriately updated to the latest prediction ephemeris.

After receiving the position and time data, the prediction ephemeris, and the firmware-related data from the user terminal 3, the sensor device 2 generates a random number time that determines the time until starting to automatically operate from the sleep state, and causes the CPU 11-1 to go to sleep (step A40).

The sensor device 2 starts operating the CPU 11-1 after the random number time has elapsed from the sleep state, and requests the user terminal 3 to connect. Further, when the sensor device 2 retains a log file that has not yet been transmitted to the user terminal 3, the sensor device 2 transmits the log file to the user terminal 3, as a log file that has not been transmitted to the user terminal 3 (step A41).

The user terminal 3, which has received the connection request from the sensor device 2, transmits the position and time data and the firmware-related data to the sensor device 2 (step A42). Thereafter, similar sequence is performed between the sensor device 2 and the user terminal 3.

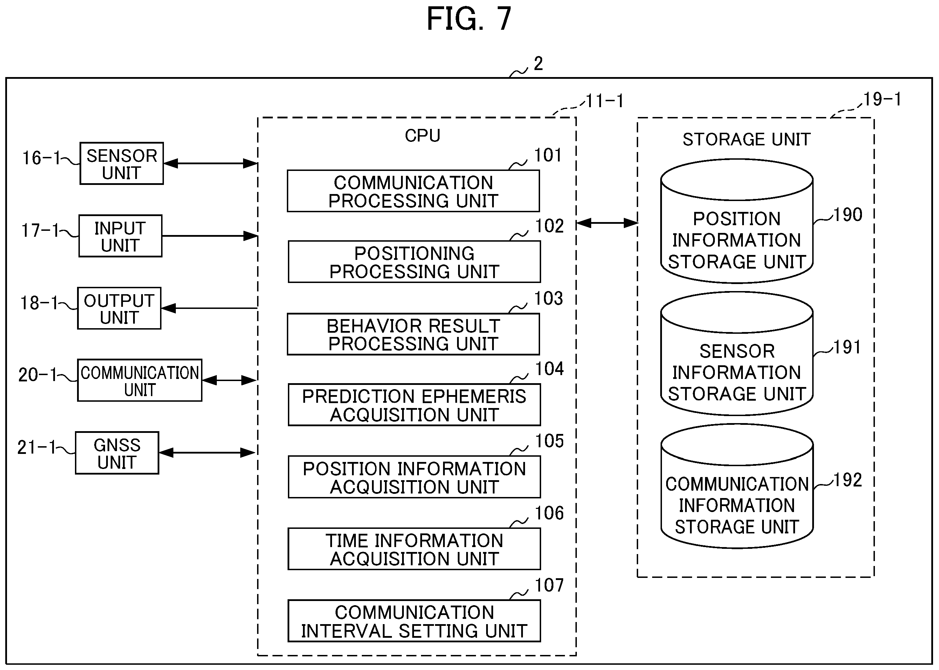

Next, processing related to the prediction ephemeris of the sensor device 2 of the present embodiment will be described. FIG. 7 is a functional block diagram showing a functional configuration for executing the processing related to the prediction ephemeris in the functional configuration of the sensor device 2 according to the embodiment of the present invention.

### [Functional Block]

As shown in FIG. 7, one region of the storage unit 19-1 includes a positioning information storage unit 190 that stores information related to positioning including the position information and the prediction ephemeris, a sensor information storage unit 191 that stores information related to the user's activity acquired by the sensor device 2, and a communication information storage unit 192 that stores information related to the communication with the user terminal 3.

In the sensor device 2 of the present embodiment, the CPU 11-1 functions as a communication processing unit 101, a positioning processing unit 102, a behavior result processing unit 103, a prediction ephemeris acquisition unit 104, a position information acquisition unit 105, a time information acquisition unit 106, and a communication interval setting unit 107, and implements the processing related to the prediction ephemeris. Data necessary for realizing the processing related to the prediction ephemeris is appropriately transmitted and received between these functional blocks at appropriate timing, including cases not specifically described below.

The communication processing unit 101 executes processing for establishing communication between the sensor device 2 and the user terminal 3. The communication processing unit 101 executes pairing processing between the sensor device 2 and the user terminal 3 and processing related to transmission and reception of various data such as the prediction ephemeris between the sensor device 2 and the user terminal 3. As described above, the connection between the sensor device 2 and the user terminal 3 is established by BLE in the present embodiment.

The positioning processing unit 102 executes positioning processing of the sensor device 2 based on the prediction ephemeris. The prediction ephemeris is used as orbit information in calculated of the positioning processing, and is also used as search information for searching satellites used for positioning. The positioning processing unit 102 can search for a satellite in a short time by narrowing down a range for searching for the satellite based on the current position retained by the sensor device 2, the orbit of the satellite indicated by the prediction ephemeris, and the time. The positioning processing unit 102 performs the positioning processing to specify an exact position, based on a distance to a receiver acquired from signals of a plurality of satellite (for example, three or four satellites) specified by the search processing and the position of the satellite indicated by the prediction ephemeris.

The behavior result processing unit 103 acquires a log file of an activity as a behavior result of the user, and executes processing for transmitting the acquired log file to the paired user terminal 3. In the present embodiment, the activity includes behaviors involving movement, for example, walking and running. The behavior result processing unit 103 acquires, as a log file, information indicating changes in the user's activity, which is preset based on the activity determined by the user's operation.

The prediction ephemeris acquisition unit 104 executes processing for acquiring the prediction ephemeris from the user terminal 3. In the present embodiment, the prediction ephemeris acquisition unit 104 executes processing for requesting the user terminal 3 to transmit the prediction ephemeris at a starting timing of the sensor device 2 or a transmission timing of the log file. As described above, the prediction ephemeris acquisition unit 104 transmits an instruction to the user terminal 3 to download the prediction ephemeris from the management server 1, receives the prediction ephemeris, which is downloaded by the user terminal 3 based on the instruction, from the user terminal 3, and stores the prediction ephemeris.

The position information acquisition unit 105 acquires the position information of the sensor device 2 positioned by the positioning processing unit 102. Further, the position information acquisition unit 105 of the present embodiment executes processing for acquiring, as reference information, communication device position information indicating the position of the user terminal 3 in order to confirm whether the position information stored in the positioning information storage unit 190 is appropriate.

The time information acquisition unit 106 executes processing for acquiring time information indicating the current time from the RTC 25-1. Further, the time information acquisition unit 106 of the present embodiment executes processing for acquiring, as reference information, time information possessed by the user terminal 3 in order to confirm whether the current time information is appropriate.

The communication interval setting unit 107 sets an interval of timing at which the communication device position information and the time information are acquired from the user terminal 3. In the present embodiment, an acquisition timing is changed based on the communication device position information and the time information acquired as the reference information from the user terminal 3. More specifically, when there is a large discrepancy between the information indicating the position and time of the sensor device 2 and the information indicating the position and time of the user terminal 3, the communication interval setting unit executes processing for shortening the interval at which the connection request is issued to the user terminal 3 subjected to pairing.

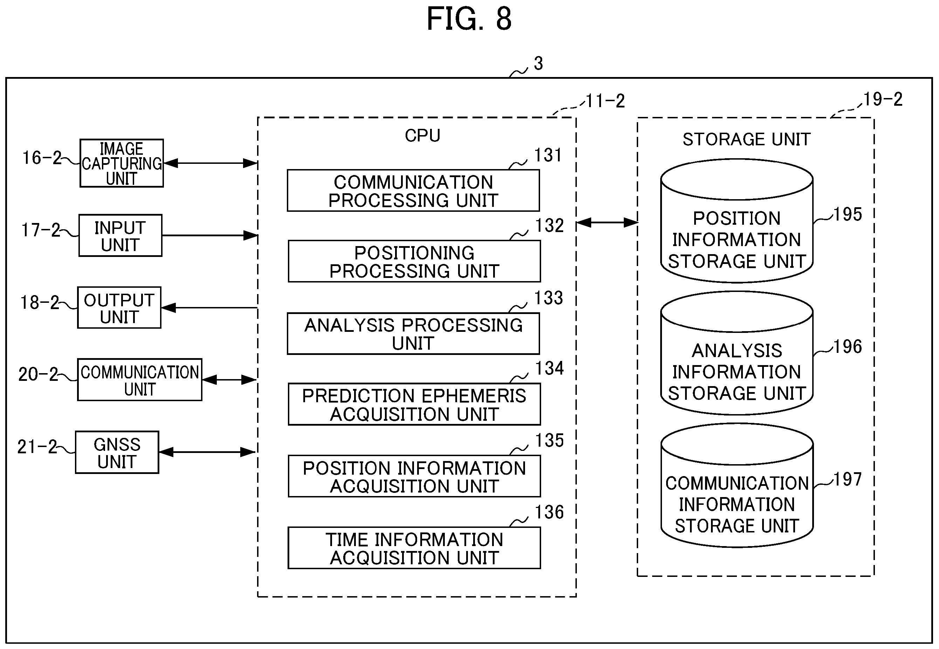

Next, functional blocks of the user terminal 3 will be described. FIG. 8 is a functional block diagram showing a functional configuration for executing the processing related to the prediction ephemeris in the functional configuration of the user terminal 3 according to the embodiment of the present invention.

As shown in FIG. 8, one region of the storage unit 19-2 includes a positioning information storage unit 195 that stores information related to positioning such as position information, an analysis information storage unit 196 that stores information related to the user's activity received from the sensor device 2 and the analysis result of the information, and a communication information storage unit 197 that stores information related to the communication with the sensor device 2.

In the user terminal 3 of the present embodiment, the CPU 11-2 functions as a communication processing unit 131, a positioning processing unit 132, an analysis processing unit 133, a prediction ephemeris acquisition unit 134, a position information acquisition unit 135, and a time information acquisition unit 136, and implements the processing related to the prediction ephemeris. Data necessary for realizing the processing related to the prediction ephemeris is appropriately transmitted and received between these functional blocks at appropriate timing, including cases not specifically described below.

The communication processing unit 131 and the positioning processing unit 132 implement functions similar to those of the communication processing unit 101 and the positioning processing unit 102 of the sensor device 2.

The analysis processing unit 133 analyzes the activity log file received from the sensor device 2. For example, the analysis processing unit 133 performs processing for evaluating a running distance and a posture during running and processing for displaying evaluation results.

The prediction ephemeris acquisition unit 134 executes processing for downloading the prediction ephemeris from the management server 1. The prediction ephemeris acquisition unit 104 of the present embodiment downloads the prediction ephemeris from the management server 1 when receiving a download instruction from the sensor device 2. The user terminal 3 may download the prediction ephemeris by itself instead of the instruction from the sensor device 2. In this case, the user terminal 3 preferably downloads the prediction ephemeris from the management server 1 at an appropriate random timing after the update time zone of the management server 1 has elapsed.

The position information acquisition unit 135 acquires the position information of the user terminal 3 by positioning processing or by a signal from the base station, and stores the position information. The position information acquired by the position information acquisition unit 135 is transmitted to the sensor device 2 in response to a request from the sensor device 2.

The time information acquisition unit 136 acquires the current time information indicating the current time from the RTC 25-1 or by a signal from the base station, and stores the current time information. The time information acquired by the time information acquisition unit 136 is transmitted to the sensor device 2 in response to a request from the sensor device 2.

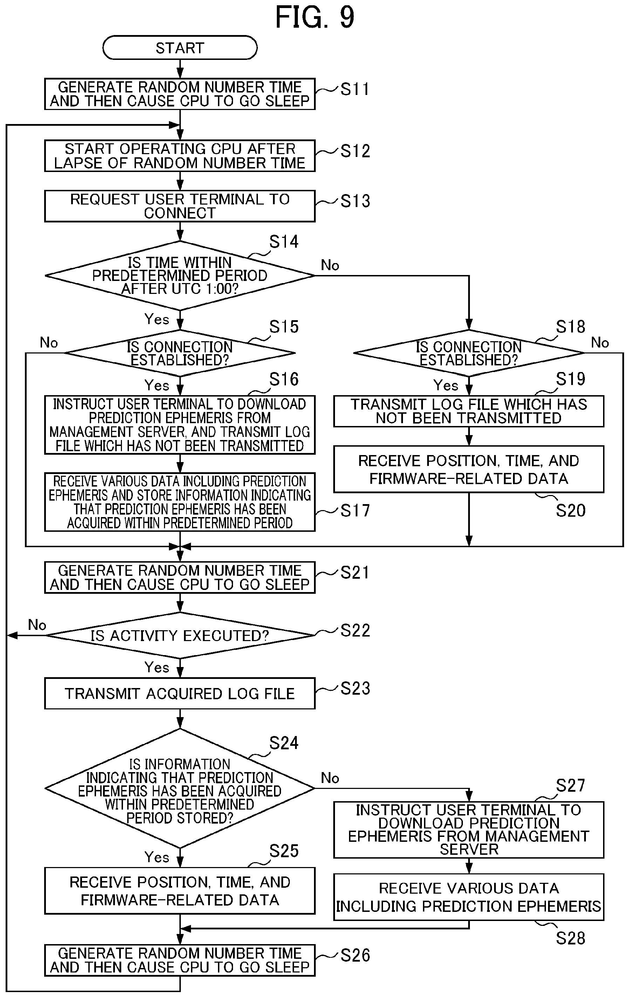

Next, a description will be given with respect to a flow of the processing in which the sensor device 2 of the present embodiment acquires the prediction ephemeris. FIG. 9 is a flowchart showing the flow of the processing in which the sensor device 2 according to the embodiment of the present invention acquires the prediction ephemeris.

As shown in FIG. 9, when the sensor device 2 starts to operate, the time information acquisition unit 106 generates a random number time (for example, a random time between 1 and 3 hours) that determines a time from a sleep state to an automatic operation start-up, sets an operation starting time to the RTC 25-1 based on the generated random number time, and then causes the CPU 11-1 to go sleep (step S11). As described above, the operation starting time is set to a time excluding UTC0:00 to 1:00, which is an update time zone of the management server 1.

The time information acquisition unit 106 executes processing for starting the operation of the CPU 11-1 after the random number time has elapsed from the sleep state (step S12). Then, the communication processing unit 101 transmits information indicating a connection request to the user terminal 3 (step S13). Further, the communication processing unit 101 determines whether a time is within a predetermined period after UTC0:00 to 1:00 (step S14). When it is determined step S14 that the time is within the predetermined period (Yes in step S14), the process proceeds to step S15, and when it is determined that the time is not within the predetermined period (No in step S14), the process proceeds to step S18. The predetermined period herein is a period set after the update time zone of the prediction ephemeris of the management server 1 has elapsed. As described above, for example, a period from 1 to 3 hours after UTC1:00 is set as the predetermined period.

A case will be described in which when it is determined in step S14 that the time is within the predetermined period. The communication processing unit 101 determines whether the connection has succeeded (step S15). When the communication processing unit 101 receives information indicating establishment of connection from the user terminal 3 (Yes in step S15), the process proceeds to step S16. When receiving the information indicating establishment of connection from the user terminal 3, the communication processing unit 101 transmits information indicating an instruction that the prediction ephemeris acquisition unit 104 downloads the prediction ephemeris from the management server 1 to the user terminal 3. Further, the behavior result processing unit 103 transmits a log file, which has not been transmitted, to the user terminal 3 through the communication processing unit 101 (step S16).

When the communication processing unit 101 receives various data including the prediction ephemeris transmitted from the user terminal 3, the prediction ephemeris acquisition unit 104 causes the positioning information storage unit 190 to store various data received from the user terminal 3 and causes the communication information storage unit 192 to store the information indicating that the prediction ephemeris is acquired (step S17). Here, the prediction ephemeris stored in the sensor device 2 is the latest positioning satellite information updated during the update time zone of the management server 1. Then, the process proceeds to step S21. In step S15, when the communication processing unit 101 fails to receive the information indicating establishment of connection from the user terminal 3 (in a case where the connection is not established) (No in step S15), the process proceeds to step S21 without proceeding to steps S16 and S17.

A case will be described in which it is determined in step S14 that the time is out of the predetermined period. In this case, the communication processing unit 101 also determines whether the connection has succeeded (step S18). When the communication processing unit 101 receives the information indicating the establishment of connection from the user terminal 3 (Yes in step S18), the behavior result processing unit 103 transmits a log file, which has not been transmitted, to the user terminal 3 through the communication processing unit 101 (step S19). Here, the log file, which has not been transmitted, is a log file that has not yet been transmitted to the user terminal 3 described above.

After step S19, the communication processing unit 101 receives the position information, the time information, and the firmware-related data of the user terminal 3 (step S20). In the process of step S20, the position information acquisition unit 105 causes the positioning information storage unit 190 to store the received position information of the user terminal 3, and the time information acquisition unit 106 causes the positioning information storage unit 190 to store the received time information of the user terminal 3. After the process of step S20, the process proceeds to step S21. In step S18, when the communication processing unit 101 fails to receive the information indicating the establishment of connection from the user terminal 3 (in a case where the connection is not established) (No in step S18), the process proceeds to step S21 without proceeding to steps S19 and S20. In other words, when it is determined in step S14 that the time is out of the predetermined period, the processing for acquiring the prediction ephemeris is not executed.

After the process of steps S21 to step S20, after the operation starting time is set to the RTC 25-1 based on the random number time generated by the time information acquisition unit 106, the CPU 11-1 is put to sleep (step S21). After the process of step S21, the behavior result processing unit 103 monitors whether the sleep is canceled by the user's operation and the activity is executed (step S22). When the behavior result processing unit 103 detects that the activity is executed (Yes in step S22), the process proceeds to step S23. When the behavior result processing unit 103 detects that the activity is not executed (No in step S22), the process returns to step S12.

When the behavior result processing unit 103 detects that the activity is executed, the behavior result processing unit 103 starts acquiring a log file indicating the user's behavior result, and the communication processing unit 101 executes processing for transmitting the acquired log file to the user terminal 3 (step S23). Here, the log file to be acquired and transmitted is the running-related data, for example, the running locus, the running distance, the speed, the running pitch, the stride, and the posture when the user performs the running as an activity, as described above.

Next, the prediction ephemeris acquisition unit 104 determines whether the communication information storage unit 192 stores the information indicating that the prediction ephemeris can be acquired within the predetermined period (step S24). In step S24, when the communication information storage unit 192 stores the information indicating that the prediction ephemeris can be acquired within the predetermined period (Yes in step S24), the process proceeds to step S25, and the communication processing unit 101 receives the position information, the time information, and the firmware-related data of the user terminal 3 (step S25).

In step S24, when the communication information storage unit 192 stores the information indicating that the prediction ephemeris cannot be acquired within the predetermined period

(No in step S24), the process proceeds to step S27, and the prediction ephemeris acquisition unit 104 transmits the information instructing to download the prediction ephemeris from the management server 1, to the user terminal 3 through the communication processing unit 101. When the communication processing unit 101 receives various data including the prediction ephemeris transmitted from the user terminal **3,** the prediction ephemeris acquisition unit 104 causes the positioning information storage unit 190 to store the information that the prediction ephemeris can be acquired, together with various data received from the user terminal 3 (step S28).

When the process reaches step S26 through step S25 or S28, the time information acquisition unit 106 sets the operation starting time to the RTC 25-1 based on the generated random number time, and then causes the CPU 11-1 to go sleep (step S26). Then, the process returns to step S12, and processes after step S12 are repeated.

As described above, the sensor device 2 as an information processing device includes: the communication processing unit 101 that communicates with the user terminal 3 as a communication device configured to download the prediction ephemeris (positioning satellite information) from the external device (the management server 1 as a management device); the positioning processing unit 102 that acquires the current position using the prediction ephemeris; the behavior result processing unit 103 that acquires the behavior information indicating the result of the user's behavior; and the prediction ephemeris acquisition unit 104 as a positioning satellite information acquisition unit that, upon acquisition of the log file (behavior information) by the behavior result processing unit 103, instructs the user terminal 3 to download the prediction ephemeris from the external device (management server 1) through the communication by the communication processing unit 101 and executes the processing for acquiring the prediction ephemeris from the user terminal 3.

Thereby, the prediction ephemeris can be reliably acquired via the user terminal 3. For example, when the distance between the sensor device 2 and the user terminal 3 is great, or when the power of the user terminal 3 is in the off state, the communication is not established between the sensor device 2 and the user terminal 3, the instruction to download the prediction ephemeris is not transmitted to the user terminal 3 even when the timing for acquiring the prediction ephemeris arrives at the sensor device 2, and the prediction ephemeris cannot be acquired from the user terminal 3. In this regard, according to the sensor device 2 of the present embodiment, the instruction to download the prediction ephemeris is executed at the timing when the activity with a high probability of establishing the communication between the sensor device 2 and the user terminal 3 is executed, and the prediction ephemeris retained by the sensor device 2 is reliably updated to the latest state at the timing of use by the user.

Further, the prediction ephemeris acquisition unit 104 of the present embodiment: instructs the user terminal 3 to download the prediction ephemeris (positioning satellite information) from the external device (management server 1) within the predetermined period; in a case where the prediction ephemeris is acquired from the user terminal 3 within the predetermined period, does not execute the processing for acquiring the prediction ephemeris from the user terminal even when the behavior result processing unit 103 acquires the log file (behavior information); and in a case where the prediction ephemeris is not acquired from the user terminal 3 within the predetermined period, executes the processing for acquiring the prediction ephemeris from the user terminal 3.

Thereby, when the prediction ephemeris is acquired within the predetermined period, the instruction to download the prediction ephemeris is not transmitted from the sensor device 2 to the user terminal 3 even when the motion of the activity is detected. In a state where the appropriate prediction ephemeris is already retained in the sensor device 2, since communication for acquiring a new prediction ephemeris is not performed, unnecessary communication can be prevented from occurring and communication efficiency can be improved.

Further, the behavior result processing unit 103 of the present embodiment acquires the log file (behavior information) and then transmits the log file to the user terminal 3 through the communication by the communication processing unit 101, and the prediction ephemeris acquisition unit 104 executes the processing for instructing the user terminal 3 to download the prediction ephemeris from the external device (management server 1) based on the timing of transmitting the log file to the user terminal 3.

Thereby, the sensor device 2 can execute the processing for more reliably transmitting the instruction to download the prediction ephemeris to the user terminal in the state where the communication is established and for receiving the prediction ephemeris, which is downloaded from the external device (management server 1), from the user terminal 3.

Further, the behavior result processing unit 103 of the present embodiment acquires the result of the behavior such as running or walking involving movement of the user, as behavior information.

Thereby, whenever the activity involving movement that uses the positioning information is executed, the prediction ephemeris becomes an appropriate state, and thus it is possible to more reliably avoid a situation in which the behavior involving movement cannot be properly analyzed due to the prolonged state in which the prediction ephemeris is not downloaded.

In the above-described embodiment, an example has been described in which the movement is involved as a result of behavior, but the present invention is not limited thereto. Further, the log file transmission processing is not necessarily required. The sensor device 2 may request the user terminal 3 to acquire the prediction ephemeris at the time of detecting the start of the activity.

Hereinbefore, an embodiment of the present invention has described. The processing sequence described above can be executed by hardware, and can also be executed by software. In other words, the functional configuration of FIG. 7 is merely an illustrative example, and the present invention is not particularly limited thereto. More specifically, the types of functional blocks employed to realize the above-described functions are not particularly limited to the examples shown in FIG.7, so long as the information processing device can be provided with the functions enabling the aforementioned processing sequence to be executed in its entirety. In addition, a single functional block may be configured by a single piece of hardware, a single installation of software, or a combination thereof. The functional configurations of the present embodiment are realized by a processor executing arithmetic processing, and processors that can be used for the present embodiment include a unit configured by a single unit of a variety of single processing devices such as a single processor, multi-processor, multi-core processor, etc., and a unit in which the variety of processing devices are combined with a processing circuit such as ASIC (Application Specific Integrated Circuit) or FPGA (Field-Programmable Gate Array).

In the case of having the series of processing executed by software, the program constituting this software is installed from a network or recording medium to a computer or the like. The computer may be a computer equipped with dedicated hardware. In addition, the computer may be a computer capable of executing various functions, e.g., a general purpose personal computer, by installing various programs.

The storage medium containing such a program can not only be constituted by the removable medium distributed separately from the device main body for supplying the program to a user, but also can be constituted by a storage medium or the like supplied to the user in a state incorporated in the device main body in advance. The removable medium is composed of, for example, a magnetic disk (including a floppy disk), an optical disk, a magnetic optical disk, or the like. The optical disk is composed of, for example, a CD-ROM (Compact Disk-Read Only Memory), a DVD (Digital Versatile Disk), Blu-ray (Registered Trademark) or the like. The magnetic optical disk is composed of an MD (Mini-Disk) or the like. The storage medium supplied to the user in a state incorporated in the device main body in advance is constituted by, for example, the ROM 12 of FIG. 3
in which the program is recorded or a hard disk included in the storage unit 19 of FIGS. 3, etc.

It should be noted that, in the present specification, the steps defining the program recorded in the storage medium include not only the processing executed in a time series following this order, but also processing executed in parallel or individually, which is not necessarily executed in a time series. Further, in the present specification, the terminology of the system means an entire apparatus including a plurality of apparatuses and a plurality of units.

The embodiments of the present invention described above are only illustrative, and are not to limit the technical scope of the present invention. The present invention can assume various other embodiments. Additionally, it is possible to make various modifications thereto such as omissions or replacements within a scope as defined by the appended claims.

### INDUSTRIAL APPLICABILITY

The present invention is particularly useful in updating positioning satellite information such as an actual ephemeris or a prediction ephemeris acquired via the communication device. According to the present invention, for example, an instruction to download the prediction ephemeris is executed at the timing when the activity with a high probability of establishing the communication between the information processing device and the communication device is executed, and the positioning satellite information retained by the information processing device is reliably updated to the latest state at the timing of use by the user.

### EXPLANATION OF REFERENCE NUMERALS

1: Management server (management device)
2: Sensor device (Information processing device)
3: User terminal (Communication device)
25-1: RTC (time generator)
101: Communication processing unit
102: Positioning processing unit
103: Behavior result processing unit
104: Prediction ephemeris acquisition unit (positioning satellite information acquisition unit)
105: Position information acquisition unit
106: Time information acquisition unit
107: Communication interval setting unit
190: Positioning information storage unit (storage unit)

## Claims

1. An information processing device comprising:
a communication processing unit (101) configured to communicate with a communication device (3) configured to download positioning satellite information from an external device (1);
a positioning processing unit (102) configured to acquire a current position using the positioning satellite information; and
a behavior result processing unit (103) configured to acquire behavior information indicating a result of a user's behavior;
**characterized by**
a time information acquisition unit (106) configured to generate a random number time that is an irregular time, and
a positioning satellite information acquisition unit (104) that is configured to, upon acquisition of the behavior information by the behavior result processing unit (103), instruct the communication device (3) to download the positioning satellite information from the external device (1) through communication by the communication processing unit (101) and execute processing for acquiring the positioning satellite information from the communication device (3) and in that
the time information acquisition unit (106) is configured to execute processing for starting the operation of a processor (11-1) of the information processing device after the random number time since going into a sleep state, and
the positioning satellite information acquisition unit (104) is configured to instruct the communication device (3) to download the positioning satellite information after the processor (11-1) started the operation after the random number time.

2. The information processing device according to claim 1, wherein the time information acquisition unit (106) is configured to set a starting timing of the processor (11-1) so that the starting timing is not included in an update time zone in which a management device (1) updates the positioning satellite information, the management device (1) being configured to manage downloading of the positioning satellite information by the communication device (3).

3. The information processing device according to claim 1 or 2, wherein the positioning satellite information acquisition unit (104) is configured to:
instruct the communication device (3) to download the positioning satellite information from the external device (1) within a predetermined period;
in a case where the positioning satellite information is acquired from the communication device (3) within the predetermined period, not to execute processing for acquiring the positioning satellite information from the communication device (3) even when the behavior result processing unit (103) acquires the behavior information; and
in a case where the positioning satellite information is not acquired from the communication device (3) within the predetermined period, to execute processing for acquiring the positioning satellite information from the communication device (3), wherein
in the case where the positioning satellite information is acquired from the communication device (3) within the predetermined period, upon acquisition of the behavior information by the behavior result processing unit (103), the communication processing unit (101) acquires position information of the communication device (3) and time information without acquiring the positioning satellite information.

4. The information processing device according to any one of claims 1 to 3, wherein the behavior result processing unit (103) is configured to acquire the behavior information and then transmit the behavior information to the communication device (3) through the communication by the communication processing unit (101), and
the positioning satellite information acquisition unit (104) is configured to instruct the communication device (3) to download the positioning satellite information from the external device (1) based on a timing of transmitting the behavior information to the communication device (3).

5. The information processing device according to any one of claims 1 to 4, wherein the behavior result processing unit (103) is configured to acquire a result of a behavior involving movement of the user, as the behavior information.

6. A behavior analysis method comprising:
a communication processing step (S13) of communicating with a communication device (3) configured to download positioning satellite information from an external device (1);
a positioning processing step of acquiring a current position using the positioning satellite information; and
a behavior result processing step of acquiring behavior information indicating a result of a user's behavior;
**characterized by**
a time information acquisition step (S11, S21, S26) of generating a random number time that is an irregular time,
a prediction ephemeris step (S16, S27) of, upon acquisition of the behavior information in the behavior result processing step, instructing the communication device (3) to download the positioning satellite information from the external device (1) through communication in the communication processing step (S13) and executing processing (S17, S28) for acquiring a prediction ephemeris from the communication device (3), and
a processing execution step (S12) of starting the operation of a processor (11-1) after the random number time since going into a sleep state, and in that
the prediction ephemeris step (S16, S27) instructs the communication device (3) to download the positioning satellite information after the processor (11-1) started the operation after the random number time.

7. A program causing a computer (2) to execute functions that comprise:
a communication processing function of communicating with a communication device (3) configured to download positioning satellite information from an external device (1);
a positioning processing function of acquiring a current position using the positioning satellite information; and
a behavior result processing function of acquiring behavior information indicating a result of a user's behavior;
**characterized in that**
the program further causing the computer (2) to execute functions that comprise
a time information acquisition function of generating a random number time that is an irregular time,
a prediction ephemeris acquisition function of, upon acquisition of the behavior information by the behavior result processing function, instructing the communication device (3) to download the positioning satellite information from the external device (1) through communication by the communication processing function and executing processing for acquiring a prediction ephemeris from the communication device (3), and
a processing execution function of starting the operation of a processor (11-1) of the computer (2) after the random number time since going into a sleep state, wherein
the prediction ephemeris acquisition function instructs the communication device (3) to download the positioning satellite information after the processor (11-1) started the operation after the random number time.

## Patentansprüche

1. Informationsverarbeitungs-Vorrichtung, die umfasst:
eine Kommunikations-Verarbeitungseinheit (101), die so ausgeführt ist, dass sie mit einer Kommunikationsvorrichtung (3) kommuniziert, die zum Herunterladen von Ortungssatelliten-Informationen von einer externen Vorrichtung (1) ausgeführt ist;
eine Ortungs-Verarbeitungseinheit (102), die so ausgeführt ist, dass sie eine aktuelle Position unter Verwendung der Ortungssatelliten-Informationen ermittelt; sowie eine Verhaltensergebnis-Verarbeitungseinheit (103), die so ausgeführt ist, dass sie Verhaltens-Informationen ermittelt, die ein Ergebnis eines Benutzer-Verhaltens anzeigen;
**gekennzeichnet durch**
eine Zeitinformations-Ermittlungseinheit (106), die so ausgeführt ist, dass sie eine Zufallszahl-Zeit generiert, die eine regellose Zeit ist, sowie
eine Ortungssatelliten-Informations-Bezugseinheit (104), die so ausgeführt ist, dass sie nach Ermittlung der Verhaltens-Informationen durch die Verhaltensergebnis-Verarbeitungseinheit (103) die Kommunikationsvorrichtung (3) anweist, die Ortungssatelliten-Informationen von der externen Vorrichtung (1) mittels Kommunikation durch die Kommunikations-Verarbeitungseinheit (101) herunterzuladen und Verarbeitung zum Beziehen der Ortungssatelliten-Informationen von der Kommunikationsvorrichtung (3) durchzuführen, und **dadurch, dass**
die Zeitinformations-Ermittlungseinheit (106) so ausgeführt ist, dass sie Verarbeitung zum Starten der Operation eines Prozessors (11-1) der Informationsverarbeitungs-Vorrichtung nach der Zufallszahl-Zeit seit Eintritt in einen Schlafmodus durchführt, und
die Ortungssatelliten-Informations-Bezugseinheit (104) so ausgeführt ist, dass sie die Kommunikationsvorrichtung (3) anweist, die Ortungssatelliten-Informationen herunterzuladen, nachdem der Prozessor (11-1) die Operation nach der Zufallszahl-Zeit gestartet hat.

2. Informationsverarbeitungs-Vorrichtung nach Anspruch 1, wobei die Zeitinformations-Ermittlungseinheit (106) so ausgeführt ist, dass sie eine Start-Zeit des Prozessors (11-1) so einstellt, dass die Start-Zeit nicht in einer Update-Zeitzone eingeschlossen ist, in der eine Verwaltungsvorrichtung (1) die Ortungssatelliten-Informationen aktualisiert, wobei die Verwaltungsvorrichtung (1) so ausgeführt ist, dass sie Herunterladen der Ortungssatelliten-Informationen durch die Kommunikationsvorrichtung (3) verwaltet.

3. Informationsverarbeitungs-Vorrichtung nach Anspruch 1 oder 2, wobei die Ortungssatelliten-Informations-Bezugseinheit (104) so ausgeführt ist, dass sie:
die Kommunikationsvorrichtung (3) anweist, die Ortungssatelliten-Informationen von der externen Vorrichtung (1) innerhalb einer vorgegebenen Periode herunterzuladen;
für den Fall, dass die Ortungssatelliten-Informationen von der Kommunikations-vorrichtung (3) innerhalb der vorgegebenen Periode bezogen werden, Verarbeitung zum Beziehen der Ortungssatelliten-Informationen von der Kommunikationsvorrichtung (3) selbst dann nicht durchführt, wenn die Verhaltensergebnis-Verarbeitungseinheit (103) die Verhaltens-Informationen erfasst; und
für den Fall, dass die Ortungssatelliten-Informationen von der Kommunikations-vorrichtung (3) nicht innerhalb der vorgegebenen Periode bezogen werden, Verarbeitung zum Beziehen der Ortungssatelliten-Informationen von der Kommunikationsvorrichtung (3) durchführt, wobei
für den Fall, dass die Ortungssatelliten-Informationen von der Kommunikations-vorrichtung (3) innerhalb der vorgegebenen Periode bezogen werden, die Kommunikations-Verarbeitungseinheit (101) nach Ermitteln der Verhaltens-Informationen durch die Verhaltensergebnis-Verarbeitungseinheit (101) Positions-Informationen der Kommunikationsvorrichtung (3) sowie Zeit-Informationen ermittelt, ohne die Ortungssatelliten-Informationen zu beziehen.

4. Informationsverarbeitungs-Vorrichtung nach einem der Ansprüche 1 bis 3, wobei die Verhaltensergebnis-Verarbeitungseinheit (103) so ausgeführt ist, dass sie die Verhaltens-Informationen ermittelt und dann die Verhaltens-Informationen mittels der Kommunikation durch die Kommunikations-Verarbeitungseinheit (101) zu der Kommunikationsvorrichtung (3) überträgt, und
die Ortungssatelliten-Informations-Bezugseinheit (104) so ausgeführt ist, dass sie die Kommunikationsvorrichtung (3) auf Basis einer Zeitsteuerung zum Senden der Verhaltens-Informationen zu der Kommunikationsvorrichtung (3) anweist, die Ortungssatelliten-Informationen von der externen Vorrichtung (1) herunterzuladen.

5. Informationsverarbeitungs-Vorrichtung nach einem der Ansprüche 1 bis 4, wobei die Verhaltensergebnis-Verarbeitungseinheit (103) so ausgeführt ist, dass sie ein Ergebnis eines Verhaltens, das Bewegung des Benutzers einschließt, als die Verhaltens-Informationen erfasst.

6. Verhaltensanalyse-Verfahren, das umfasst:
einen Schritt (S13) für Kommunikations-Verarbeitung, in dem mit einer Kommunikationsvorrichtung (3) kommuniziert wird, die so ausgeführt ist, dass sie Ortungssatelliten-Informationen von einer externen Vorrichtung (1) herunterlädt;
einen Schritt für Ortungs-Verarbeitung, in dem eine aktuelle Position unter Verwendung der Ortungssatelliten-Informationen ermittelt wird; sowie
einen Schritt für Verhaltensergebnis-Verarbeitung, in dem Verhaltens-Informationen ermittelt werden, die ein Ergebnis eines Benutzerverhaltens anzeigen;
**gekennzeichnet durch**
einen Schritt (S11, S21, S26) für Ermittlung von Zeit-Informationen, in dem eine Zufallszahl-Zeit generiert wird, die eine regellose Zeit ist,
einen Schritt (S16, S27) für Positions-Vorhersage, in dem, nach Ermittlung der Verhaltens-Informationen in dem Schritt für Verhaltensergebnis-Verarbeitung die Kommunikationsvorrichtung (3) angewiesen wird, die Ortungssatelliten-Informationen von der externen Vorrichtung (1) mittels Kommunikation in dem Schritt (S13) für Kommunikations-Verarbeitung herunterzuladen, und Verarbeitung (S17, S28) für Ermittlung einer vorhergesagten Position von der Kommunikationsvorrichtung (3) durchgeführt wird, und
einen Schritt (S12) zum Durchführen von Verarbeitung, in dem die Operation eines Prozessors (11-1) nach der Zufallszahl-Zeit seit Eintritt in einen Schlafmodus gestartet wird, und **dadurch, dass**
in dem Schritt (S16, S27) für Positions-Vorhersage die Kommunikationsvorrichtung (3) angewiesen wird, die Ortungssatelliten-Informationen herunterzuladen, nachdem der Prozessor (11-1) die Operation nach der Zufallszahl-Zeit gestartet hat.

7. Programm, das einen Computer (2) veranlasst, Funktionen auszuführen, die umfassen:
eine Funktion für Kommunikations-Verarbeitung zum Kommunizieren mit einer Kommunikationsvorrichtung (3), die so ausgeführt ist, dass sie Ortungssatelliten-Informationen von einer externen Vorrichtung (1) herunterlädt;
eine Funktion für Ortungs-Verarbeitung zum Ermitteln einer aktuellen Position unter Verwendung der Ortungssatelliten-Informationen; sowie
eine Funktion für Verhaltensergebnis-Verarbeitung zum Ermitteln von Verhaltens-Informationen, die ein Ergebnis eines Benutzerverhaltens anzeigen;
**dadurch gekennzeichnet, dass**
das Programm den Computer (2) des Weiteren veranlasst, Funktionen auszuführen, die umfassen:
eine Funktion für Ermittlung von Zeit-Informationen zum Generieren einer Zufallszahl-Zeit, die eine regellose Zeit ist,
eine Funktion für Positions-Vorhersage zum Anweisen der Kommunikationsvorrichtung (3), die Ortungssatelliten-Informationen von der externen Vorrichtung (1) mittels Kommunikation mit der Funktion für Kommunikations-Verarbeitung herunterzuladen und
zum Durchführen von Verarbeitung für Erfassung einer vorhergesagten Position von der Kommunikationsvorrichtung (3) nach Ermittlung der Verhaltens-Informationen mit der Funktion für Verhaltensergebnis-Verarbeitung, sowie
eine Funktion für Durchführung von Verarbeitung zum Starten der Operation eines Prozessors (11-1) des Computers (2) nach der Zufallszahl-Zeit seit Eintritt in einen Schlafmodus, wobei
mit der Funktion für Positions-Vorhersage die Kommunikationsvorrichtung (3) angewiesen wird, die Ortungssatelliten-Informationen herunterzuladen, nachdem der Prozessor (11-1) die Operation nach der Zufallszahl-Zeit gestartet hat.

## Revendications

1. Dispositif de traitement d'information comprenant :
une unité de traitement de communication (101) configurée pour communiquer avec un dispositif de communication (3) configuré pour télécharger de l'information de satellite de positionnement à partir d'un dispositif externe (1) ;
une unité de traitement de positionnement (102) configurée pour acquérir une position actuelle en utilisant l'information de satellite de positionnement ; et
une unité de traitement de résultats de comportement (103) configurée pour acquérir de l'information de comportement indiquant un résultat de comportement d'un utilisateur ;
**caractérisé par**
une unité d'acquisition d'information temporelle (106) configurée pour générer un temps de nombre aléatoire qui est un temps irrégulier, et
une unité d'acquisition d'information de satellite de positionnement (104) qui est configurée pour, lors de l'acquisition de l'information de comportement par l'unité de traitement de résultats de comportement (103), ordonner au dispositif de communication (3) de télécharger l'information de satellite de positionnement à partir du dispositif externe (1) via une communication par l'unité de traitement de communication (101) et d'exécuter le traitement pour acquérir l'information de satellite de positionnement auprès du dispositif de communication (3), et
en ce que l'unité d'acquisition d'information temporelle (106) est configurée pour exécuter un traitement pour démarrer le fonctionnement d'un processeur (11-1) du dispositif de traitement d'information après le temps de nombre aléatoire depuis le passage dans un état de veille, et
l'unité d'acquisition d'information de satellite de positionnement (104) est configurée pour ordonner au dispositif de communication (3) de télécharger l'information de satellite de positionnement après que le processeur (11-1) a démarré le fonctionnement après le temps de nombre aléatoire.

2. Dispositif de traitement d'information selon la revendication 1, dans lequel l'unité d'acquisition d'information temporelle (106) est configurée pour définir un moment de démarrage du processeur (11-1) de sorte que le moment de démarrage ne soit pas inclus dans un fuseau horaire de mise à jour dans lequel un dispositif de gestion (1) met à jour l'information de satellite de positionnement, le dispositif de gestion (1) étant configuré pour gérer le téléchargement de l'information de satellite de positionnement par le dispositif de communication (3).

3. Dispositif de traitement d'information selon la revendication 1 ou 2, dans lequel l'unité d'acquisition d'information de satellite de positionnement (104) est configurée pour :
ordonner au dispositif de communication (3) de télécharger l'information de satellite de positionnement à partir du dispositif externe (1) dans une période prédéterminée ;
dans le cas où l'information de satellite de positionnement est acquise auprès du dispositif de communication (3) dans la période prédéterminée, ne pas exécuter le traitement d'acquisition de l'information de satellite de positionnement auprès du dispositif de communication (3) même quand l'unité de traitement de résultats de comportement (103) acquiert l'information de comportement ; et
dans le cas où l'information de satellite de positionnement n'est pas acquise auprès du dispositif de communication (3) dans la période prédéterminée, exécuter un traitement pour acquérir l'information de satellite de positionnement auprès du dispositif de communication (3), dans lequel
dans le cas où l'information de satellite de positionnement est acquise auprès du dispositif de communication (3) dans la période prédéterminée, lors de l'acquisition de l'information de comportement par l'unité de traitement de résultats de comportement (103), l'unité de traitement de communication (101) acquiert de l'information de position du dispositif de communication (3) et de l'information temporelle sans acquérir l'information de satellite de positionnement.

4. Dispositif de traitement d'information selon l'une quelconque des revendications 1 à 3, dans lequel l'unité de traitement de résultats de comportement (103) est configurée pour acquérir l'information de comportement, puis pour transmettre l'information de comportement au dispositif de communication (3) via la communication par l'unité de traitement de communication (101), et
l'unité d'acquisition d'information de satellite de positionnement (104) est configurée pour ordonner au dispositif de communication (3) de télécharger l'information de satellite de positionnement à partir du dispositif externe (1) sur la base d'un moment de transmission de l'information de comportement au dispositif de communication (3).

5. Dispositif de traitement d'information selon l'une quelconque des revendications 1 à 4, dans lequel l'unité de traitement de résultats de comportement (103) est configurée pour acquérir un résultat d'un comportement impliquant un mouvement de l'utilisateur, en tant qu'information de comportement.

6. Procédé d'analyse de comportement, comprenant :
une étape de traitement de communication (S13) consistant à communiquer avec un dispositif de communication (3) configuré pour télécharger de l'information de satellite de positionnement à partir d'un dispositif externe (1) ;
une étape de traitement de positionnement consistant à acquérir une position actuelle en utilisant de l'information de satellite de positionnement ; et
une étape de traitement de résultats de comportement consistant à acquérir de l'information de comportement indiquant un résultat du comportement d'un utilisateur ;
**caractérisé par**
une étape d'acquisition d'information temporelle (S11, S21, S26) consistant à générer un temps de nombre aléatoire qui est un temps irrégulier,
une étape d'éphéméride de prédiction (S16, S27) consistant, lors de l'acquisition de l'information de comportement à l'étape de traitement de résultats de comportement, à ordonner au dispositif de communication (3) de télécharger l'information de satellite de positionnement à partir du dispositif externe (1) via une communication à l'étape de traitement de communication (S13) et à exécuter un traitement (S17, S28) pour acquérir une éphéméride de prédiction auprès du dispositif de communication (3), et
une étape d'exécution de traitement (S12) consistant à démarrer le fonctionnement d'un processeur (11-1) après le temps de nombre aléatoire écoulé depuis le passage en état de veille,
et en ce que l'étape d'éphéméride de prédiction (S16, S27) ordonne au dispositif de communication (3) de télécharger l'information de satellite de positionnement après que le processeur (11-1) a démarré le fonctionnement après le temps de nombre aléatoire.

7. Programme commandant à un ordinateur (2) d'exécuter des fonctions qui comprennent :
une fonction de traitement de communication consistant à communiquer avec un dispositif de communication (3) configuré pour télécharger de l'information de satellite de positionnement à partir d'un dispositif externe (1) ;
une fonction de traitement de positionnement consistant à acquérir une position actuelle en utilisant de l'information de satellite de positionnement ; et
une fonction de traitement de résultats de comportement consistant à acquérir de l'information de comportement indiquant un résultat du comportement d'un utilisateur ;
**caractérisé en ce que**
le programme commande en outre à l'ordinateur (2) d'exécuter des fonctions qui comprennent
une fonction d'acquisition d'information temporelle consistant à générer un temps de nombre aléatoire qui est un temps irrégulier,
une fonction d'acquisition d'éphéméride de prédiction consistant, lors de l'acquisition de l'information de comportement par la fonction de traitement de résultats de comportement, à ordonner au dispositif de communication (3) de télécharger l'information de satellite de positionnement à partir du dispositif externe (1) via une communication par la fonction de traitement de communication et d'exécuter le traitement pour acquérir une éphéméride de prédiction auprès du dispositif de communication (3), et
une fonction d'exécution de traitement consistant à démarrer le fonctionnement d'un processeur (11-1) de l'ordinateur (2) après le temps de nombre aléatoire écoulé depuis le passage en état de veille, dans lequel la fonction d'acquisition d'éphéméride de prédiction ordonne au dispositif de communication (3) de télécharger l'information de satellite de positionnement après que le processeur (11-1) a démarré le fonctionnement après le temps de nombre aléatoire.
